(19) Europäisches Patentamt
European Patent Office
Office européen des brevets

(11) **EP 4 065 307 B1**

(12) **EUROPÄISCHE PATENTSCHRIFT**

(45) Veröffentlichungstag und Bekanntmachung des Hinweises auf die Patenterteilung:
**02.10.2024   Patentblatt 2024/40**

(21) Anmeldenummer: **20816431.9**

(22) Anmeldetag: **26.11.2020**

(51) Internationale Patentklassifikation (IPC):
**B23K 26/06** *(2014.01)*      **B23K 26/0622** *(2014.01)*
**B23K 26/073** *(2006.01)*      **B23K 26/323** *(2014.01)*
**B23K 35/30** *(2006.01)*

(52) Gemeinsame Patentklassifikation (CPC):
**B23K 26/322; B23K 26/0608; B23K 26/21; B23K 26/24**

(86) Internationale Anmeldenummer:
**PCT/EP2020/083534**

(87) Internationale Veröffentlichungsnummer:
**WO 2021/105297 (03.06.2021 Gazette 2021/22)**

(54) **VERFAHREN ZUM VERSCHWEISSEN BESCHICHTETER STAHLBLECHE**

METHOD FOR WELDING COATED STEEL SHEETS

PROCÉDÉ DE SOUDAGE DE TÔLES D'ACIER REVÊTUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2019   DE 102019131906**

(43) Veröffentlichungstag der Anmeldung:
**05.10.2022   Patentblatt 2022/40**

(73) Patentinhaber: **voestalpine automotive Components Linz GmbH & Co KG 4020 Linz (AT)**

(72) Erfinder: **BRUGGER, Gerald 4020 Linz (AT)**

(74) Vertreter: **WSL Patentanwälte Partnerschaft mbB Kaiser-Friedrich-Ring 98 65185 Wiesbaden (DE)**

(56) Entgegenhaltungen:
EP-A1- 3 150 324       EP-A1- 3 441 178
EP-A1- 3 536 438       DE-A1- 102013 101 953
DE-B3- 102014 107 716

EP 4 065 307 B1

**Beschreibung**

Die Erfindung betrifft ein Verfahren zum Verschweißen beschichteter Stahlbleche nach dem Oberbegriff des Anspruchs 1.

Im Automobilbau ist es bekannt, Teile von Karosserien aus hoch härtbaren Stahlblechen herzustellen, um eine ausreichende Stabilität der Fahrgastzelle zu gewährleisten. Hochfeste Stähle haben hierbei den Vorteil, dass aufgrund der hohen Tragkraft die Dimensionen und damit auch das Gewicht verringert werden kann, so dass Kraftstoff eingespart wird.

Derart ausgebildete, hochfeste Stahlsorten sind beispielsweise Mangan-Bor-legierte Stähle, wie beispielsweise der am häufigsten hierfür eingesetzte Stahl 22MnB5.

Derartige hochfeste Stahlsorten werden im sogenannten Presshärteverfahren verarbeitet, bei dem diese Stahlsorten so hoch erhitzt werden, dass die ursprünglich ferritisch-perlitische Stahlstruktur in ein austenitisches Gefüge überführt wird. Dieses austenitische Hochtemperaturgefüge des Eisens ermöglicht es, durch eine Abschreckung mit einer Geschwindigkeit, die über der kritischen Härtegeschwindigkeit liegt, in ein martensitisches Gefüge umgewandelt zu werden. Aufgrund der unterschiedlichen Kohlenstofflöslichkeiten von Austenit und Martensit kommt es hierbei zu einer Gitterverzerrung, die eine hohe Härte bis über 1500 MPa ermöglicht. Dieses Härteverfahren ist seit längerer Zeit bekannt und wird entsprechend häufig eingesetzt.

Beim Presshärten gibt es grundsätzlich zwei verschiedene Möglichkeiten zur Herstellung derartiger Bauteile, unterschieden wird hierbei das direkte und das indirekte Verfahren.

Beim direkten Verfahren wird eine ebene Platine austenitisiert und anschließend in einem Presshärtewerkzeug in einem Hub oder mehreren Hüben umgeformt und abgeschreckt. Dieses Verfahren ist vergleichsweise günstig, ermöglicht jedoch nicht immer hochkomplexe Geometrien auszuformen.

Beim indirekten Verfahren wird zunächst aus einer ebenen Platine ein Bauteil kalt umgeformt, was auch komplexe Geometrien ermöglicht. Anschließend wird das umgeformte Bauteil austenitisiert und anschließend in einem Pressenwerkzeug abgeschreckt, ohne üblicherweise noch größere Umformungen zu erfahren. Das Umformwerkzeug hat somit eine dem bereits umgeformten Bauteil entsprechende Kontur und dient lediglich der Härtung.

Derartige, für das Presshärten eingesetzte Stahlbleche können bereits als Platine mit einer Korrosionsschutzbeschichtung ausgebildet sein. Die üblichen Korrosionsschutzbeschichtungen sind hierbei eine Zinkbeschichtung oder Zinklegierungsbeschichtung oder eine Aluminium- bzw. Aluminiumlegierungsbeschichtung.

Zudem ist es bekannt, zusammengesetzte Platinen, sogenannte Tailored Blanks zu verwenden, bei denen entweder unterschiedliche Stahlsorten zusammengeschweißt sind oder gleiche Stahlsorten, aber mit unterschiedlichen Dicken, verschweißt sind.

Auch hierbei sind selbstverständlich beschichtete Ausgangsplatinen möglich, so dass beispielsweise zwei Bleche aus einem 22MnB5 mit unterschiedlicher Dicke und einer Aluminium-Siliziumbeschichtung miteinander verschweißt werden.

Insbesondere beim Verschweißen von Aluminium-Silizium-beschichteten Blechen konnte aber festgestellt werden, dass offensichtlich Aluminium aus der Beschichtung in die Schweißnaht gelangt. Das Aluminium in der Schweißnaht wirkt sich ungünstig auf die Martensitumwandlung bzw. Martensitbildung aus, zudem verursacht Aluminium die Bildung von intermetallischen Phasen, die an sich relativ hart sind, aber auch sehr spröde und damit als Rissausgang dienen können.

Um das Problem bei dem Verschweißen von Tailored Blanks zu umgehen, ist es bekannt, Aluminiumschichten vor dem Schweißen teilbereichsweise beidseitig eines geplanten Schweißstumpfstoßes zu entfernen, um zu verhindern, dass Aluminium-Silizium in die Schweißnaht eindringen kann.

Hierbei ist von Nachteil, dass im Bereich der Schweißnaht in diesem Fall kein Korrosionsschutz besteht und insbesondere bei dem Erhitzen zum Zwecke des Härtens später die Schweißnaht und die die Schweißnaht begrenzenden Kanten verzundern und entkohlen können.

Zudem ist hierbei von Nachteil, dass diese Verfahren zum Entfernen der Aluminium-Silizium-Beschichtungen einen zusätzlichen Prozessschritt darstellen, der zudem nicht leicht zu beherrschen ist.

Aus der DE 10 2012 111 118 B3 ist ein Verfahren zum Laserschweißen eines oder mehrerer Werkstücke aus presshärtbarem Stahl, insbesondere Mangan-Bor-Stahl bekannt, bei dem im Stumpfstoß geschweißt wird und bei dem das Werkstück oder die Werkstücke eine Dicke von mind. 1,8 mm aufweisen und/oder an dem Stumpfstoß ein Dickensprung von mind. 0,4 mm entsteht, wobei bei dem Laserschweißen in das mit einem Laserstrahl erzeugte Schmelzbad Zusatzdraht zugeführt wird. Um sicherzustellen, dass sich die Schweißnaht beim Warmumformen zuverlässig in ein martensitisches Gefüge aufhärten lässt, sieht diese Schrift vor, dem Zusatzdraht mind. ein Legierungselement aus der Mangan, Chrom, Molybdän, Silizium und/oder Nickel umfassenden Gruppe zuzusetzen, dass die Bildung von Austenit in dem mit dem Laserstrahl erzeugtem Schmelzbad begünstigt, wobei dieses mind. ein Legierungselement mit einem um mind. 0,1 Gewichtsprozent größeren Masseanteil im Zusatzdraht vorhanden ist, als in dem presshärtbaren Stahl des Werkstückes oder der Werkstücke.

Aus der DE 10 2014 001 979 A1 ist ein Verfahren zum Laserschweißen eines oder mehrerer Werkstücke aus härtbarem Stahl im Stumpfstoß bekannt, wobei der Stahl insbesondere ein Mangan-Bor-Stahl ist und die Werkstücke eine Dicke zwischen 0,5 und 1,8 mm aufweisen und/oder an dem Stumpfstoß ein Dickensprung zwischen 0,2 und 0,4 mm entsteht, wobei beim Laserschweißen in das Schmelzbad ein Zusatzdraht eingeführt wird, wobei das Schmelzbad ausschließlich durch den einen Laserstrahl erzeugt wird. Um sicherzustellen, dass sich die Schweißnaht beim Warmumformen zuverlässig in ein martenstisches Gefüge aufhärten lässt, sieht die Schrift vor, dass der Zusatzdraht mindestens ein Legierungselement aus der Mangan, Chrom, Molybdän, Silizium und/oder Nickel umfassenden Gruppe enthält, sodass die Bildung von Austenit begünstigt wird.

Aus der EP 2 737 971 A1 ist ein tailor welded blank bekannt und ein Verfahren zu seiner Herstellung, wobei das Blech dadurch erzeugt wird, dass Bleche unterschiedlicher Dicke oder Zusammensetzung miteinander verbunden werden, wobei Qualitätsprobleme in der Schweißzone vermindert werden sollen. Auch hierbei wird ein Zusatzdraht verwendet, wobei dieser so ausgestaltet werden soll, dass im Temperaturbereich von 800 bis 950°C kein Ferrit entsteht. Dieses Verfahren soll insbesondere für AlSi-beschichtete Bleche geeignet sein, wobei auch dieser Draht einen höheren Gehalt an Austenit stabilisierenden Elementen haben soll, die insbesondere aus Kohlenstoff oder Mangan bestehen.

Aus der EP 1 878 531 B1 ist ein Verfahren zum hybriden Laser-Lichtbogen-Schweißen von oberflächig beschichteten metallischen Werkstücken bekannt, wobei die oberflächige Beschichtung Aluminium enthalten soll. Der Laserstrahl soll mit wenigstens einem Lichtbogen kombiniert sein, sodass ein Schmelzen des Metalls und ein Schweißen des oder der Teile bewirkt wird und dass wenigstens eines der Teile vor seinem Schweißen auf der Oberfläche einen seiner seitlichen Schnittflächen, die verschweißt werden soll, Ablagerungen der Beschichtung von Aluminium-Silizium aufweist.

Aus der EP 2 942 143 B1 ist ein Verfahren zum Verbinden von zwei Rohlingen bekannt, wobei die Rohlinge Stahlbleche sind mit einer Beschichtung, welche eine Schicht aus Aluminium oder aus einer Aluminiumlegierung umfassen, wobei die beiden Teile aneinandergeschweißt werden unter Nutzung eines Laserstrahls und eines Lichtbogens, wobei der Lichtbogenbrenner eine Fülldrahtelektrode umfasst und die Fülldrahtelektrode aus einer Stahllegierung umfassend stabilisierende Elemente besteht, wobei Laser und Lichtbogen in einer Schweißrichtung bewegt werden, wobei in Schweißrichtung der Lichtbogenschweißbrenner und der Laserstrahl nachfolgend angeordnet sind.

Aus der EP 2 883 646 B1 ist ein Verfahren zum Verbinden von zwei Rohlingen bekannt, wobei zumindest einer der Rohlinge eine Schicht aus Aluminium oder einer Aluminiumlegierung umfasst, wobei beim Schweißvorgang ein Metallpulver in die Schweißzone zugeführt wird und das Metallpulver ein auf Eisen basierendes Pulver umfassend gammastabilisierende Elemente ist und das Laserstrahlschweißen ein Zweipunktlaserstrahlschweißen ist.

Aus der EP 2 007 545 B1 ist ein Verfahren zur Herstellung eines geschweißten Teils mit sehr guten mechanischen Eigenschaften bekannt, wobei ein Stahlblech eine Beschichtung besitzt, die aus einer intermetallischen Schicht besteht und einer auf der intermetallischen Schicht befindlichen Metalllegierungsschicht. Zum Zwecke des Verschweißens der Bleche soll an der Peripherie des Blechs, d. h. den Bereichen, die verschweißt werden sollen, die Metalllegierungsschicht auf der intermetallischen Schicht entfernt sein, wobei es sich bei dieser Schicht um eine Aluminiumlegierungsschicht handelt. Diese Beschichtung soll durch einen Laserstrahl beseitigt sein, sodass diese als Aluminium-Siliziumschicht ausgebildete Schicht vor dem Verschweißen abgedampft wird, um schädliche Einflüsse des Aluminiums in der Schweißnaht zu vermeiden. Gleichzeitig soll die intermetallische Schicht bestehen bleiben, um möglicherweise korrosionshemmende Wirkungen zu entfalten.

Aus der WO 2017/103149 A1 ist ein Schweißverfahren bekannt, bei dem zwei separat erzeugte Laserstrahlen entlang einer geplanten Schweißnaht geführt werden, wobei der erste Laserstrahl dazu dient, einen Fülldraht aufzuschmelzen, während der zweite Laser durch eine rotierende Bewegung eine Vermischung des Schmelzbades sicherstellen soll. Hiermit soll das Aufschmelzen einerseits und das Vermischen des Füllmaterials andererseits sichergestellt werden. Darüber hinaus wird ein Verfahren offenbart, bei dem ein voreilender Laserstrahl erzeugt wird, der den Fülldraht aufschmilzt, während ein nacheilender Laserstrahl in zwei Laserstrahlen aufgetrennt wird, welche entlang der Schweißnaht hintereinander geführt werden, wobei ausgeführt wird, dass es in diesem Fall einer Bewegung dieser Laserstrahlen nicht bedarf.

Aus der WO 2019/030249 A1 ist ein Schweißverfahren bekannt, bei dem zwei Aluminium-Silizium-beschichtete Bleche mittels eines Lasers zusammengefügt werden, wobei dieser Laser zur Durchmischung eines Schweißbades während des Schweißvorganges rotiert.

Bei der WO 2017/103149 A1 ist von Nachteil, dass die Anlagentechnik außerordentlich aufwändig ist, wobei sich herausgestellt hat, dass bei dem angegebenen seriellen Doppelfokus mit Draht keine ausreichende Homogenisierungswirkung stattfindet.

Aus der DE 10 2017 120 051 A1 ist ein Verfahren zum Laserstrahlschweißen eines oder mehrerer Stahlbleche aus presshärtbarem Mangan-Bor-Stahl bekannt, bei dem zumindest eines der Stahlbleche eine Beschichtung aus Aluminium besitzt, wobei das Laserstrahlschweißen unter Zuführung eines Zusatzdrahts in das ausschließlich mittels eines Laserstrahls erzeugte Schmelzbad erfolgt. Der Zusatzdraht soll zumindest ein Austenitstabilisierendes Legierungselement enthalten. Das Verfahren hat zum Ziel, bei einem relativ geringen Energieverbrauch und bei einer hohen Produktivität zu erreichen, dass die Schweißnaht nach dem Warmumformen eine dem Grundwerkstoff vergleichbare Festigkeit aufweist. Hierzu wird vorgeschlagen, dass der Laserstrahl derart in Oszillation versetzt wird, dass er quer zur Schweißrichtung oszilliert, wobei die Oszillationsfrequenz des Laserstrahls mindestens 200 Hz, vorzugsweise mindestens 500 Hz beträgt. Hiermit soll insbesondere das Abtragen der Aluminiumbeschichtung am Rand der zu verschweißenden Blechkanten entfallen.

Aus der JP 2004 000 1084 ist ein Schweißverfahren bekannt, bei dem zur Verbesserung der Spaltüberbrückbarkeit und der Verbesserung der Tiefenschweißung ein Laserschweißverfahren und ein Lichtbogenschweißverfahren miteinander kombiniert werden, wobei es möglich ist, den Laser als Laser mit zwei Strahlen auszubilden, wobei die Schweißvorrichtung vorsieht, die beiden Strahlen umeinander rotieren zu lassen.

Aus der DE 10 2014 107 716 B3 ist ein Schweißverfahren bekannt, bei dem zur Reduktion von Schweißspritzern, während des Schweißens der Laserstrahl, der die Verschweißung durchführt, während der Vorschubbewegung eine räumlich oszillierende Bewegung überlagert erhält, wobei die oszillierende Bewegung parallel oder senkrecht zum Fügestoß ausgeführt wird.

Bei den genannten Verfahren ist von Nachteil, dass in der Praxis stabile tragende Schweißnähte nicht zuverlässig erzielt werden können und aus unerklärlichen Gründen immer wieder große Unterschiede in der Endfestigkeit der Schweißnähte festgestellt werden müssen.

Aufgabe der Erfindung ist es, ein Schweißverfahren zuverlässiger auszugestalten und Schweißnähte mit reproduzierbaren mechanischen Eigenschaften zu erzeugen.

Die Aufgabe wird mit einem Verfahren mit den Merkmalen des Anspruchs 1 gelöst.

Vorteilhafte Weiterbildungen sind in den hiervon abhängigen Unteransprüchen gekennzeichnet.

Erfindungsgemäß wurde herausgefunden, dass bei Verfahren, bei denen ein Laserstrahl den Draht aufschmilzt während zwei nacheilende Laserstrahlen zusätzliche Energie in das Schmelzbad einbringen, aus unerklärlichen Gründen die Schweißnähte immer wieder sehr unterschiedliche Eigenschaften aufweisen.

Bei einem Verfahren, bei dem ein einziger Laser rührt, jedoch Draht verwendet wird, konnte erfindungsgemäß herausgefunden werden, dass auch bei optimaler Vermischung des Aluminiums aus der Beschichtung im Schmelzbad rechnerisch so viel Aluminium zur Verfügung steht, dass die Schweißnähte, insbesondere bei dünnen Blechdicken, nicht ausreichend härtbar sind. Zudem konnte festgestellt werden, dass oszillierende Single-Spot-Laser ganz offensichtlich nicht in der Lage sind, eine gleichbleibende Schweißnahtqualität zu gewährleisten.

Erfindungsgemäß wird die naturgemäß bestehende Schmelzbadströmung durch eine zusätzliche erzwungene Strömung überlagert, welche durch die Rotation eines Laserdoppelstrahls erzeugt wird, um somit den Zusatzdraht und das Aluminium aus der Beschichtung homogen in der Schweißnaht zu verteilen.

Erfindungsgemäß wurde erkannt, dass zwischen der Rotationsfrequenz und der Schweißgeschwindigkeit ein Zusammenhang besteht, ohne den eine gewünschte Rührwirkung nicht erzielbar ist.

Zudem hat sich herausgestellt, dass es vorteilhaft ist, sowohl den Spotdurchmesser als auch den Spotabstand definiert einzustellen, um die gewünschten Effekte noch zu verbessern.

Erfindungsgemäß sind zumindest zwei Laserstrahlen, insbesondere zwei Teillaserstrahlen, vorhanden, die im Schweißbad rotieren. Hierbei können die Schweißlaser beispielsweise symmetrisch um die Schweißbadmitte rotieren oder asymmetrisch um die Schweißbadmitte rotieren, wobei ein Schweißstrahl bzw. Laserstrahl in einem kleineren Radius um die Schweißbadmitte rotiert, während ein zweiter Schweißstrahl oder Laserstrahl mit einem größeren Radius um die Schweißbadmitte rotiert.

Bei einer weiteren möglichen Ausführung bewegt sich ein Laserstrahl entlang der Schweißbadmitte, während ein zweiter Schweißstrahl oder Laserstrahl orbital um den ersten Schweißstrahl herum oszilliert bzw. rotiert. Erfindungsgemäß wurde herausgefunden, dass insbesondere die Vorschubgeschwindigkeit und die Rührwirkung aufeinander abgestimmt sein müssen. Die Rührwirkung wird hierbei definiert als die Zahl der Umdrehungen durch den Vorschub. Bei einer falschen Kombination aus Vorschubgeschwindigkeit und Rührwirkung können negative Effekte wie z.B. Humping, starke Spritzerbildung bis zum Schweißnahtdurchbruch auftreten. Zu geringe Vorschubgeschwindigkeit kann sich negativ auf die Wirtschaftlichkeit des Prozesses auswirken.

Die Erfindung betrifft somit ein Verfahren zum Verschweißen beschichteter Stahlbleche, insbesondere mit einer Aluminium-Silizium metallischen Überzugsschicht beschichteter Stahlbleche, wobei eine Konfiguration aus zwei Laserstrahlen vorhanden ist, wobei die Laserstrahlen auf ein zu bildendes Schweißbad einwirken, wobei zumindest ein Laserstrahl um eine Rotationsachse rotiert, sodass die Laserstrahlen eine Relativbewegung zueinander ausführen, wobei die Laserstrahlen entlang einer Schweißachse geführt werden, wobei zum Zwecke einer Schweißbaddurchmischung eine definierte Rührwirkung und eine definierte Schweißgeschwindigkeit in Abhängigkeit zueinander eingehalten werden, wobei für die Rührwirkung gilt:

$$\eta = \frac{f_{rot}}{v_w}$$

, wobei $f_{rot}$ die Rotationsfrequenz ist und $v_W$ die Schweißgeschwindigkeit ist und wobei gilt:

$$4 \leq \eta \leq \frac{120}{v_w} \left[ \frac{1}{mm} \right]$$

$$4 \leq Vw \leq 14 \left[\frac{m}{min}\right]$$

Bei einer Ausführungsform der Erfindung sind die Laserstrahlen symmetrisch um eine Rotationsachse angeordnet und rotieren diametral gegenüberliegend um die Rotationsachse oder ein Laserstrahl wird entlang einer Schweißachse geführt und der andere Laserstrahl rotiert um den ersten Laserstrahl oder ein erster Laserstrahl rotiert mit einem ersten kleineren Radius um die Rotationsachse, während der zweite Laserstrahl mit einem größeren Radius um die Rotationsachse rotiert oder eine Mischung aus diesen Bewegungsformen.

Bei einer Ausführungsform sind somit bei einer symmetrischen Rotation der Laserstrahlen bzw. deren Projektionsflächen oder Spots, die Laserstrahlen jeweils von der Mitte aus um den Spotabstand $X_{df}$ beabstandet, wobei der Spotdurchmesser bzw. Durchmesser des Laserstrahls df 0,1 mm bis 1 mm beträgt, wobei die gesamte Überdeckungsbreite der Laserstrahlen dem Abstand der Spotmitten zueinander zuzüglich eines Spotdurchmessers beträgt, wobei der Betrag zwischen 0,5 mm und 2,5 mm liegt.

Bei dieser Ausführungsform ist es insbesondere von Vorteil, dass für den Spotabstand $X_{df}$ gilt:

$$x_{df} = 0,8 * d_f$$

Bei einer nächsten Ausführungsform sind bei einer Laserstrahlkonfiguration zwei Laserstrahlen orbital angeordnet, wobei ein erster Laserstrahl entlang der Schweißfortschrittsrichtung auf einer Mittenachse des Schweißbades, nämlich der Schweißachse verbleibt, während der zweite Laserstrahl bzw. zweite Spot um eine Rotationsachse rotiert, wobei die Rotationsachse auf der Schweißachse liegt oder um die Schweißachse oszilliert und den Mittelpunkt des ersten Spots darstellt.

Bei dieser Ausführungsform ist es insbesondere von Vorteil, wenn der Spotdurchmesser zwischen 0,1 und 1 mm beträgt, wobei gilt:

$$x_{df} = 0,8 * d_f$$

und

$$0,45mm \leq x_{df} + \frac{d_f}{2} \leq 1,5mm$$

Bei einer wieder nächsten Ausführungsform rotieren bei einer Laserstrahlkonfiguration zwei Laserstrahlen bzw. zwei Laserspots um eine Rotationsachse, wobei ein erster Laserstrahl bzw. erster Laserspot mit einem ersten Radius um die Rotationsachse rotiert und der zweite Laserstrahl bzw. zweite Laserspot mit einem zweiten Radius um die Rotationsachse rotiert, wobei einer der Radien größer ist als der andere, wobei folgende Bedingungen gelten:

$$0,45mm \leq x_{df} - x_{off} + \frac{d_f}{2} \leq 1,5mm$$

$$x_{df} = 0,8 * d_f$$

$$0 < x_{off} < \frac{x_{df}}{2}$$

Wobei $X_{off}$ dem Abstand des ersten Laserstrahls von der Rotationsachse entspricht und daher die Exzentrizität der Laserstrahlen zueinander definiert.

Bei den vorgenannten Ausführungsformen ist es vorteilhaft, wenn mit einer Laserleistung zwischen 2 und 10 kW, insbesondere 3 bis 8 kW bevorzugt 4 bis 7 kW geschweißt wird.

Von Vorteil ist zudem, wenn die Rührwirkung η in mm$^{-1}$ zwischen 4 und 30 mm$^{-1}$ beträgt.

Bei einer weiteren Ausführungsform beträgt die Schweißgeschwindigkeit $v_W$ zwischen 5 und 12 m/min, insbesondere 6 und 10 m/min.

Das optimale Prozessfenster für die Rührwirkung ist zudem abhängig von der Schweißgeschwindigkeit $v_W$.

Vorteilhafterweise wird als Grundmaterial ein Stahl verwendet, der ein Bor-Mangan-Stahl ist, welcher durch ein Austenitisierungs- und Abschreckverfahren auf besonders bevorzugt auf eine Zugfestigkeit von größer als 900 MPa härtbar ist und insbesondere ein Stahl aus der Gruppe der CMnB-Stähle wie beispielsweise ein 22MnB5 oder 20MnB8 verwendet wird.

Hierbei ist insbesondere von Vorteil, wenn als Grundmaterial ein Stahl der allgemeinen Legierungszusammensetzung (in Masse-%)

| | |
|---|---|
| Kohlenstoff (C) | 0,03-0,6 |
| Mangan (Mn) | 0,3-3,0 |
| Aluminium (Al) | 0,01-0,07 |
| Silizium (Si) | 0,01-0,8 |
| Chrom (Cr) | 0,02-0,6 |
| Nickel (Ni) | <0,5 |
| Titan (Ti) | 0,01-0,08 |
| Niob (Nb) | <0,1 |
| Stickstoff (N) | < 0,02 |
| Bor (B) | < 0,02 |
| Phosphor (P) | < 0,01 |
| Schwefel (S) | < 0,01 |
| Molybdän (Mo) | < 1 |

Rest Eisen und erschmelzungsbedingte Verunreinigungen, verwendet wird.

Weiter vorteilhaft kann als Grundmaterial ein Stahl der allgemeinen Legierungszusammensetzung (in Masse-%)

| | |
|---|---|
| Kohlenstoff (C) | 0,03-0,36 |
| Mangan (Mn) | 0,3-2,00 |
| Aluminium (Al) | 0,03-0,06 |
| Silizium (Si) | 0,01-0,20 |
| Chrom (Cr) | 0,02-0,4 |
| Nickel (Ni) | <0,5 |
| Titan (Ti) | 0,03-0,04 |
| Niob (Nb) | <0,1 |
| Stickstoff (N) | < 0,007 |
| Bor (B) | < 0,006 |
| Phosphor (P) | < 0,01 |
| Schwefel (S) | < 0,01 |
| Molybdän (Mo) | < 1 |

Rest Eisen und erschmelzungsbedingte Verunreinigungen, verwendet werden.

Die Erfindung wird anhand einer Zeichnung beispielhaft erläutert. Es zeigen dabei:

Figur 1: schematisiert die symmetrische, asymmetrische und orbitale Rotation der Schweißlaserstrahlen;

Figur 2: das erfindungsgemäße Prozessfenster bezüglich der Rührwirkung;

Figur 3: die Darstellung nach Figur 2 mit der Bedeutung der außerhalb liegenden Bereiche;

Figur 4: eine Tabelle, zeigend 16 unterschiedliche Versuche im Vergleich von erfindungsgemäßen und nicht-erfindungsgemäßen Ausführungsformen;

Figur 5: eine Darstellung einer symmetrischen Rühranordnung mit den Funktionen des Spotabstandes, des Spotdurchmessers zueinander;

Figur 6: das Prozessfenster bei einer symmetrischen Rühranordnung;

Figur 7: eine schematische Darstellung einer orbitalen Rühranordnung mit den Funktionen des Spotabstandes und des Spotdurchmessers;

Figur 8: das Prozessfenster der orbitalen Rühranordnung;

Figur 9: die Darstellung einer asymmetrischen Rühranordnung mit der Funktion des Spotabstandes, des Spotdurchmessers und der Exzentrität;

Figur 10: eine gehärtete Schweißnaht in einer Schliffdarstellung gemäß des Versuchs V1 nach der Tabelle;

Figur 11: eine Schliffdarstellung gemäß Versuch V2 nach der Tabelle;

Figur 12: eine Schliffdarstellung der Schweißnaht nach Versuch V4 in der Tabelle;

Figur 13: eine Schweißnaht im Querschnitt in Schliffdarstellung gemäß Versuch V16 nach der Tabelle.

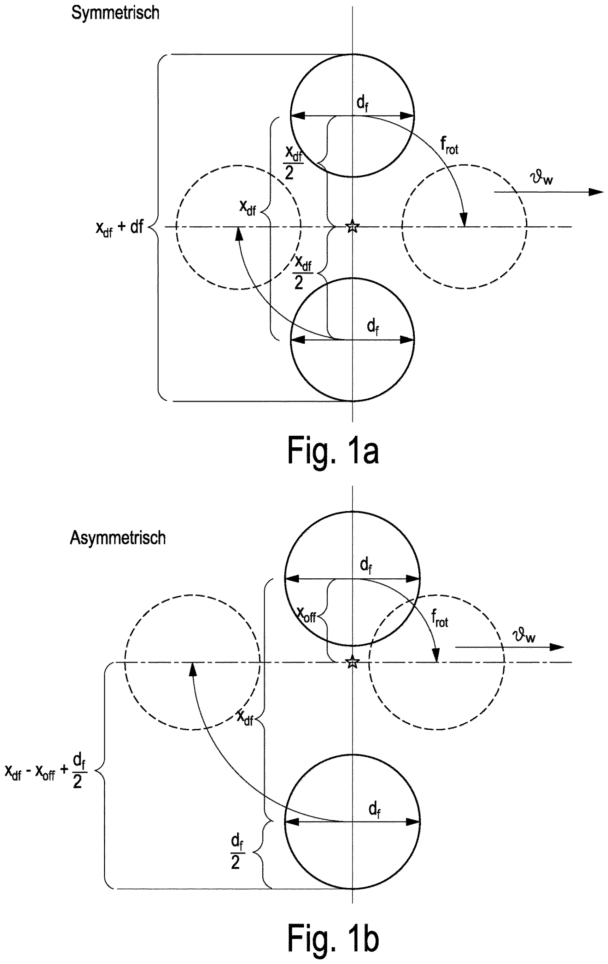

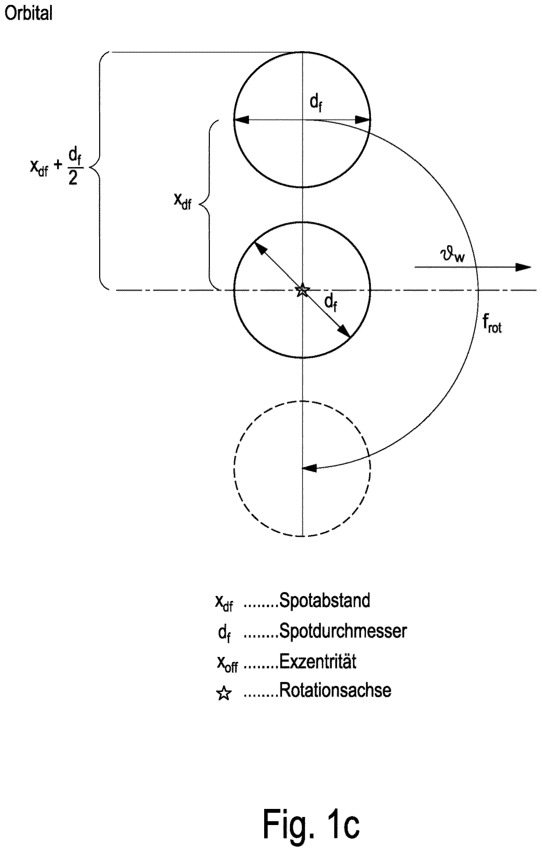

In Figur 1 sind drei unterschiedliche prinzipiell mögliche und auch miteinander kombinierbare Laserstrahlkonfigurationen gezeigt, wobei bei den gezeigten Laserstrahlkonfigurationen in einer symmetrischen Konfiguration (Fig. 1a), die Laserstrahlen symmetrisch zu einer Rotationsachse angeordnet sind und hierbei diametral gegenüberliegend um die Rotationsachse gedreht werden.

Die symmetrische Konfiguration kann vorteilhafterweise die höchste Rührwirkung erzielen. Bei einer asymmetrischen Anordnung (Fig. 1b) ist ein Laserstrahl näher zur Rotationsachse angeordnet als der andere, sodass eine Exzentrizität erzeugt wird. Durch die asymmetrische Anordnung kann vorteilhafterweise auf die gewünschte Schweißnahtgeometrie eingewirkt werden.

Bei der orbitalen Anordnung (Fig. 1c) ist ein zentraler Laserstrahl vorhanden, der entlang einer Schweißfortschrittsrichtung bewegt wird, während der zweite Laserstrahl, der von diesem entfernt ist, sich um diesen herum und um die Rotationsachse dreht.

Die orbitale Anordnung kann vorteilhafterweise auf allfällige Blechdickenunterschiede ausgleichend wirken.

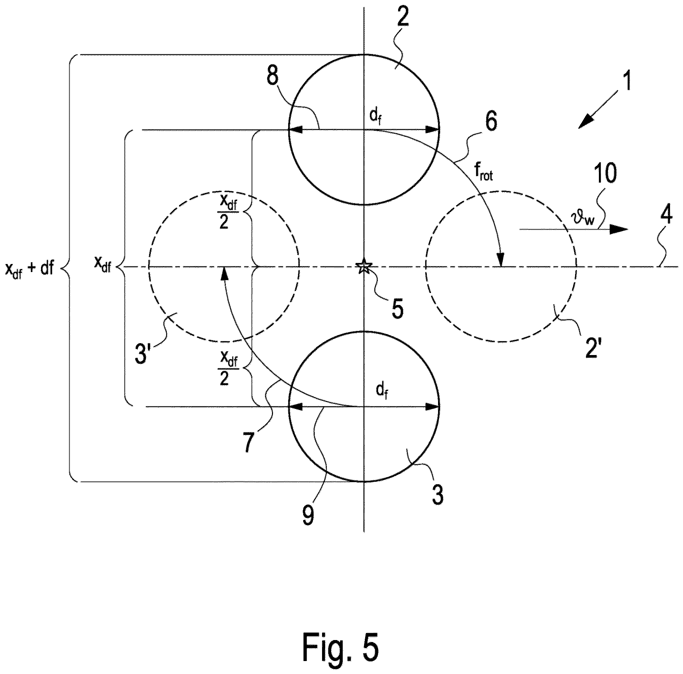

In Figur 5 ist die symmetrische Rühranordnung genauer gezeigt.

Bei dieser Laserstrahlkonfiguration 1 sind zwei Laserstrahlen 2, 3 vorhanden, welche jeweils in etwa gleich von einer idealisierten Schweißbadmitte 4 entfernt sind. Bevorzugt liegt in der idealen Schweißbadmitte 4 auch die Rotationsachse 5, um die sich die beiden Laserstrahlen 2, 3 herum, entsprechend der Rotationsrichtungen 6, 7, drehen. Dementsprechend sind um 90° versetzte beispielhafte Folgepositionen 2', 3'gezeigt. Die Laserstrahlen 2, 3 bzw. deren Projektionsfläche (Spot) haben einen gegebenen Durchmesser df, entsprechend der Ausdehnungspfeile 8, 9.

Die beiden Laserstrahlen 2, 3 bzw. deren Projektionsflächen (Spots) sind jeweils von der Mitte aus betrachtet um den Spotabstand $X_{df}$ beabstandet. Die theoretische Schweißbadbreite beträgt dementsprechend den Spotabstand plus jeweils einem halben Spotdurchmesser. Der Schweißfortschritt findet entsprechend des Pfeiles 10, entlang der idealisierten Schweißbadmitte 4, mit einer Schweißfortschrittsgeschwindigkeit $v_W$ statt.

Bei dieser Konfiguration einer symmetrischen rotierenden Anordnung ist der Spotdurchmesser df, vorzugsweise innerhalb eines Bereichs von 0,1 bis 1 mm angesiedelt.

Der Abstand der Spotmitte zueinander, zuzüglich des Spotdurchmessers, liegt vorzugsweise zwischen 0,5 mm und 3 mm, insbesondere 0,9 mm bis 2,5 mm, wobei vorzugsweise für den Spotabstand $x_{df}$ gilt $x_{df} \geq 0,8 * d_f$.

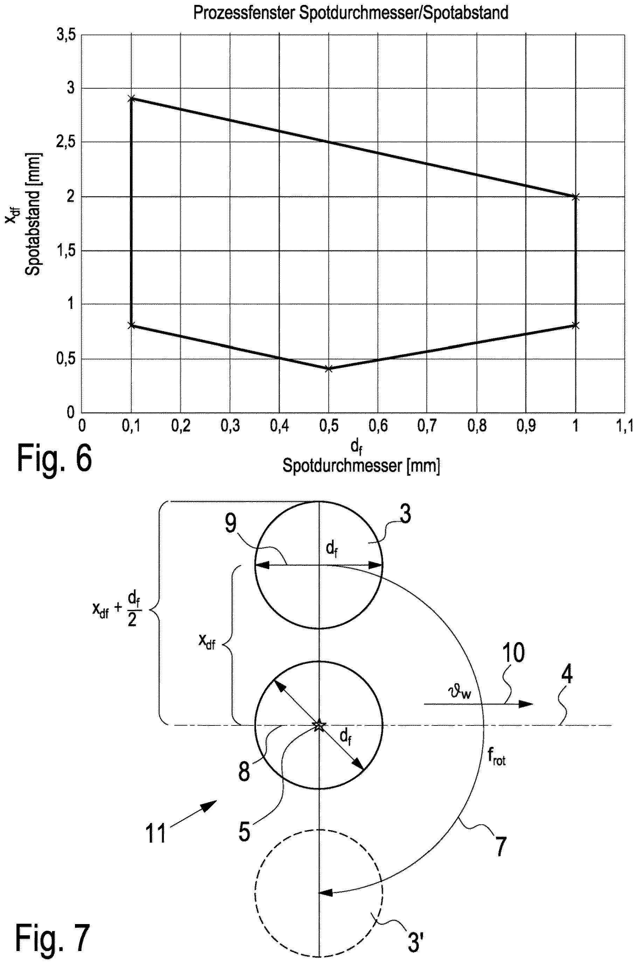

Ein geeignetes Prozessfenster für die symmetrische Rühranordnung, betreffend den Zusammenhang zwischen Spotabstand und Durchmesser, erkennt man in Figur 6. Wie bereits ausgeführt, gilt als Gesetzmäßigkeit, dass der Spotdurchmesser df zwischen 0,1 und 1 mm beträgt.

Bei einer weiteren vorteilhaften Laserstrahlkonfiguration 11 (Figur 7), sind zwei Laserstrahlen 2, 3 orbital angeordnet, das bedeutet, dass ein erster Spot 2, entsprechend der Schweißfortschrittsrichtung 10, auf der Schweißachse 4 verbleibt, während ein zweiter Spot 3 um eine Rotationsachse 5 rotiert, die auf der Schweißachse 4 liegt und den Mittelpunkt des ersten Spots 2 darstellt.

Die Rotation des zweiten Spots 3 erfolgt dementsprechend entlang der Rotationsrichtung 7, die in einem bestimmten Radius um die Rotationsachse 5 angeordnet ist. Die unterschiedlichen Positionen des zweiten Laserspots 3 sind hierbei in Figur 7 beispielhaft um 180° gedreht mit der Position 3' gezeigt. Durchgeführt werden jedoch vollständige Rotationen, während der Verschweißung entlang des Schweißfortschritts 10.

Die Schweißachse 4 ist gleichzeitig auch die idealisierte Schweißbadmitte 4.

Bei dieser vorteilhaften Ausführungsform beträgt der Spotdurchmesser ebenfalls zwischen 0,1 und 1 mm, wobei hierbei gilt

$$0,45mm \leq x_{df} + \frac{d_f}{2} \leq 1,5mm$$

.

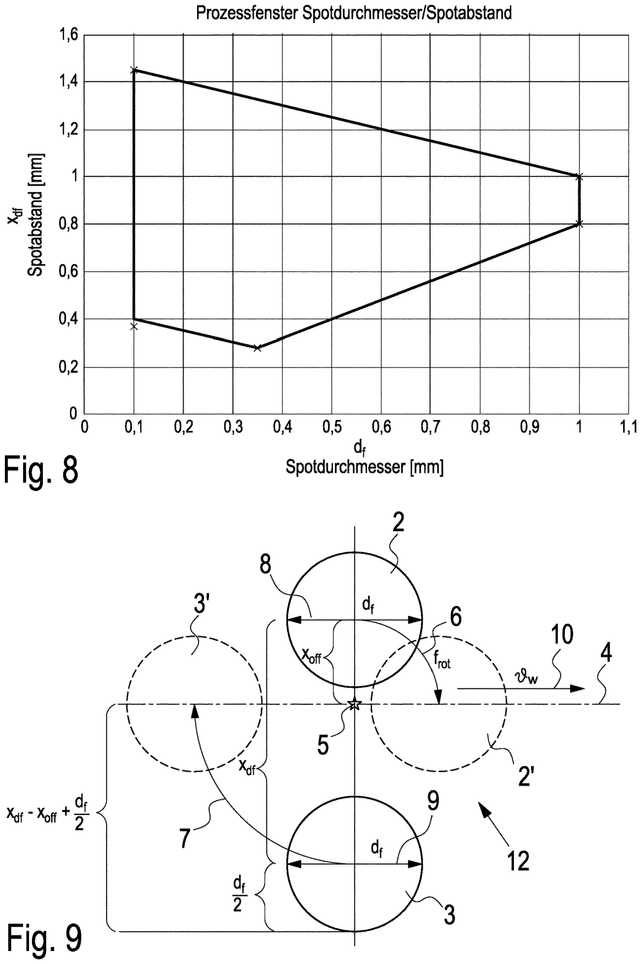

Auch hier gilt, dass $x_{df} = 0,8 * d_f$ ist. In Figur 8 ist das entsprechend der soeben genannten Rahmenbedingungen geltende Prozessfenster für die orbitale Rühranordnung angegeben, wobei in dem Prozessfenster die Funktion des Spotabstands über dem Spotdurchmesser angegeben ist und der entsprechend erfindungsgemäße Bereich sich innerhalb der geschlossenen Fläche befindet.

Bei einer weiteren vorteilhaften Ausführungsform einer Laserstrahlkonfiguration 1 (dargestellt in Figur 9), rotieren wiederum zwei Laserspots 2, 3 um eine Rotationsachse 5, wobei jedoch eine erste Rotationsrichtung 6 eines ersten Laserstrahls 2 bzw. ersten Laserspots 2, dichter an der Rotationsachse angeordnet ist, als die zweite Rotationsrichtung 7 des zweiten Laserstrahls 3. Die Spotabstandsmitte ist somit von der Schweißbadmitte 4 entfernt bzw. zu dieser versetzt angeordnet.

Bei dieser vorteilhaften Ausführungsform gilt wieder, dass der Spotdurchmesser df zwischen 0,1 und 1 mm beträgt, wobei für diese zudem die folgende Bedingung eingehalten wird:

$$0,45mm \leq x_{df} - x_{off} + \frac{d_f}{2} \leq 1,5mm$$

$$x_{df} = 0,8 * d_f$$

$$0 < x_{off} < \frac{x_{df}}{2}$$

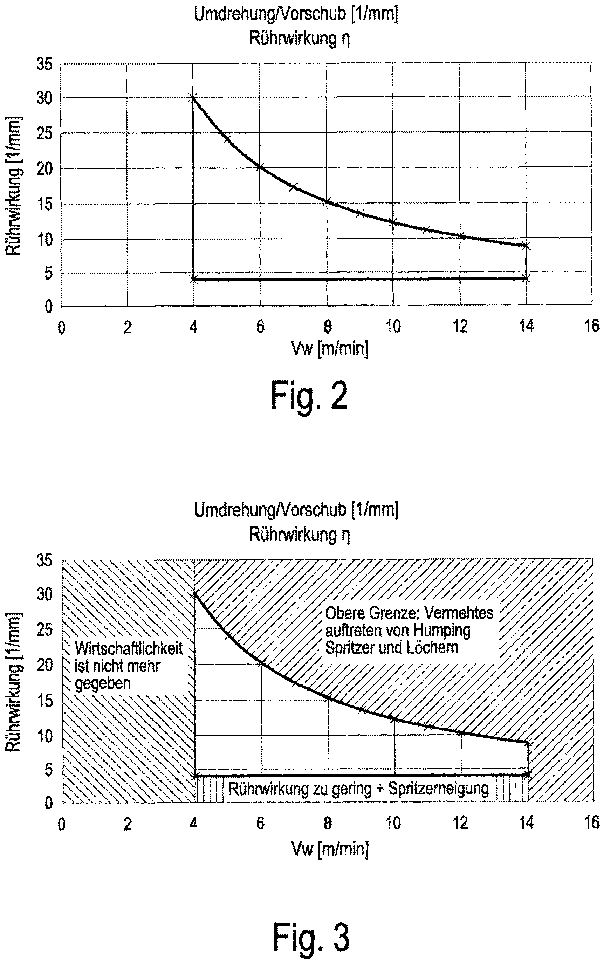

In Figur 2 wird das erfindungsgemäße Prozessfenster bezüglich der Rührwirkung dargestellt. Dabei zeigt Figur 3 die jeweiligen Effekte bei der Durchführung des Prozesses bei ungeeigneten, d.h. außerhalb des Prozessfensters liegenden Parametern.

Bei der Wahl einer zu hohen Rührwirkung in Kombination mit einer hohen Schweißgeschwindigkeit kann es zu Humping (Instabiler Schweißprozess), vermehrtem Auftreten von Spritzern bis hin zu Laserschweißnahtdurchbruch kommen.

Überraschenderweise kann auch bei einer zu geringen Rührwirkung, die Spritzneigung stark ansteigen.

Eine Laserschweißgeschwindigkeit ($v_W$) von weniger als 4 m/min ist zwar technisch möglich aber wirtschaftlich nicht mehr sinnvoll.

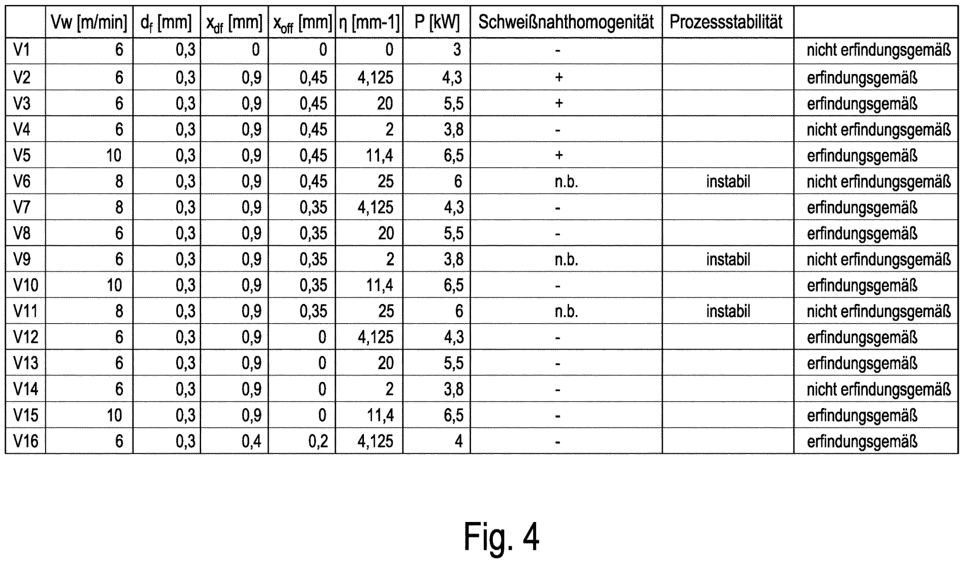

In der Tabelle gemäß Figur 4 sind sechzehn Schweißversuche dargestellt, wobei die Schweißversuche mit unterschiedlichen Schweißfortschrittsgeschwindigkeiten, unterschiedlichen Rührwirkungen und unterschiedlichen Leistungen durchgeführt wurden. Nach dem Härten wurden die Schweißnähte begutachtet und entsprechend der Schweißnahthomogenität und Prozessstabilität klassifiziert. N.b. steht für nicht beurteilbar, da bei diesen Versuchen keine stabile Schweißnaht erzielt werden konnte.

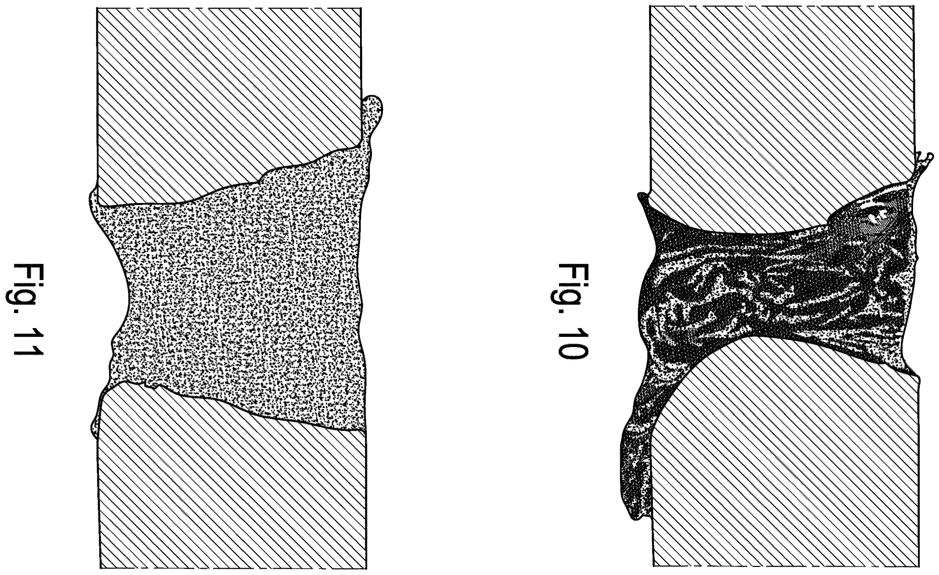

In Figur 10 ist ein Schweißnahtgefüge nach der Härtung gezeigt (Beispiel V1 aus der Tabelle aus Fig. 4) bei dem die erfindungsgemäßen Parameter nicht eingehalten wurden. Das Schweißnahtgefüge ist nach der Härtung optisch schon als inhomogen wahrnehmbar, wobei die Schweißfortschrittsgeschwindigkeit 6 m pro Minute betrug. Der Spotdurchmesser 0,3 mm, jedoch bei einem Spotabstand von 0, was bedeutet, dass lediglich ein einzelner Laser verwendet wurde. Es zeigt sich, dass mit diesem herkömmlichen Verfahren ein qualitativ befriedigendes Ergebnis nicht erreichbar ist.

In Figur 11 ist das Ergebnis einer erfindungsgemäßen Ausführung (Beispiel Versuch 2 aus der Tabelle aus Fig. 4) zu sehen, wobei der Schliff nach der Härtung homogen ist. Der Spotdurchmesser betrug hier 0,3 mm, wobei eine symmetrische Rühranordnung verwendet wurde, bei der der Spotabstand 0,9 mm betrug.

Die Laserleistung betrug 4,3 kW, die Schweißfortschrittsgeschwindigkeit 6 m pro Minute. Die Rührwirkung η betrug 4,125 mm⁻¹, wobei die Rührwirkung der Quotient aus der Rotationsfrequenz und der Schweißgeschwindigkeit bzw. dem Schweißfortschritt ist.

Der Abstand der Spotmitte zur Rotationsachse betrug 0,45 mm, das bedeutet, dass die Spots die Rotationsachse auf einem Radius umkreist haben.

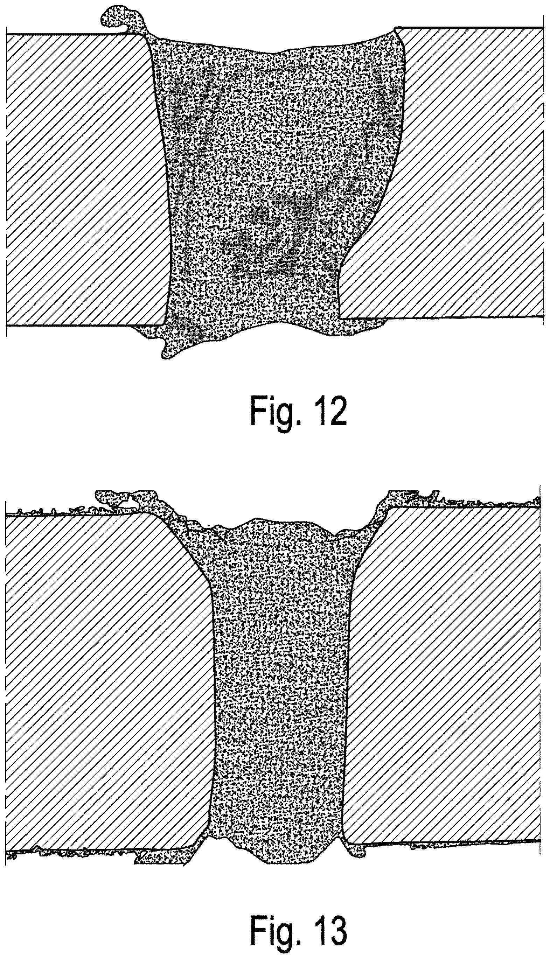

In Figur 12 ist Versuch 4 gezeigt, der nicht erfindungsgemäß ist. Während der Spotdurchmesser und der Spotabstand in einem erfindungsgemäßen Bereich liegen, so wie die Schweißfortschrittsgeschwindigkeit, die mit 6 m pro Minute derjenigen des Versuchs 2 entspricht, auch ist der Abstand der Spotmitte zur Rotationsachse gleich, jedoch ist die Rührwirkung als Quotient aus der Rotationsfrequenz und Schweißfortschrittsgeschwindigkeit zu gering, sodass der Schliff nach der Härtung eine deutliche Inhomogenität zeigt.

In Figur 13 ist das Ergebnis des erfindungsgemäßen Versuchs 16 gezeigt. Man erkennt, dass ein homogenes Schweißnahtgefüge vorliegt. Der Spotabstand beträgt hierbei 0,4 mm bei einem Spotdurchmesser von 0,3 mm, wobei die Fortschrittsgeschwindigkeit der der anderen Versuche entsprach. Die Rührwirkung η ist mit 4,125 mm⁻¹ im erfindungsgemäßen Bereich, wobei der Abstand der Spotmitte zur Rotationsachse 0,2 mm betrug.

Bei der Erfindung ist von Vorteil, dass durch eine gezielte Auswahl an Parametern und eine entsprechende Prozesssteuerung zuverlässig homogene Schweißnähte bei der Verschweißung von Aluminium-Silizium beschichteten Blechen erreicht werden.

**Patentansprüche**

1. Verfahren zum Verschweißen beschichteter Stahlbleche, insbesondere mit einer Aluminium-Silizium metallischen Überzugsschicht beschichteter Stahlbleche, wobei eine Konfiguration (1, 11, 12) aus zwei Laserstrahlen (2, 3) vorhanden ist, wobei die Laserstrahlen auf ein zu bildendes Schweißbad einwirken, wobei zumindest ein Laserstrahl (3) um eine Rotationsachse (5) rotiert, sodass die Laserstrahlen (2, 3) eine Relativbewegung zueinander ausführen, wobei die Laserstrahlen (2, 3) entlang einer Schweißachse (4) geführt werden, wobei zum Zwecke einer Schweißbaddurchmischung eine definierte Rührwirkung und eine definierte Schweißgeschwindigkeit in Abhängigkeit zueinander eingehalten werden, wobei für die Rührwirkung gilt:

$$\eta = \frac{f_{rot}}{v_W}$$

, wobei $f_{rot}$ die Rotationsfrequenz ist und $v_W$ die Schweißgeschwindigkeit ist und wobei gilt:

$$4 \leq \eta \leq \frac{120}{v_W} \left[\frac{1}{mm}\right]$$

Und

$$4 \leq Vw \leq 14 \left[\frac{m}{min}\right]$$

2. Verfahren nach Anspruch 1,
   **dadurch gekennzeichnet,**
   **dass** die Laserstrahlen (2, 3) symmetrisch um eine Rotationsachse (5) angeordnet diametral gegenüberliegend um die Rotationsachse (5) rotieren oder ein Laserstrahl (2) entlang einer Schweißachse geführt wird und der andere Laserstrahl (3) um den ersten Laserstrahl (2) rotiert oder ein erster Laserstrahl (2) mit einem ersten kleineren Radius um die Rotationsachse (5) rotiert, während der zweite Laserstrahl (3) mit einem größeren Radius um die Rotationsachse (5) rotiert oder eine Mischung aus diesen Bewegungsformen.

3. Verfahren nach einem der vorhergehenden Ansprüche,
   **dadurch gekennzeichnet,**
   **dass** bei einer symmetrischen Rotation der Laserstrahlen (2, 3) bzw. deren Projektionsflächen oder Spots, die Laserstrahlen (2, 3) jeweils von der Mitte aus um den Spotabstand $X_{df}$ beabstandet sind, wobei der Spotdurchmesser bzw. Durchmesser des Laserstrahls df 0,1 mm bis 1 mm beträgt, wobei die gesamte Überdeckungsbreite der Laserstrahlen (2, 3) aus dem Abstand der Spotmitten zueinander, zuzüglich eines Spotdurchmessers beträgt, wobei der Betrag zwischen 0,5 mm und 2,5 mm liegt.

4. Verfahren nach Anspruch 3,
   **dadurch gekennzeichnet,**
   **dass** für den Spotabstand $X_{df}$ gilt

$$x_{df} = 0{,}8 * d_f .$$

5. Verfahren nach Anspruch 2,
   **dadurch gekennzeichnet,**
   **dass** bei einer Laserstrahlkonfiguration (11) zwei Laserstrahlen (2, 3) orbital angeordnet sind, wobei ein erster Laserstrahl (3) entlang der Schweißfortschrittsrichtung (10) auf einer Mittenachse des Schweißbades, nämlich der Schweißachse (4) verbleibt, während der zweite Laserstrahl (3) bzw. zweite Spot (3) um eine Rotationsachse (5) rotiert, wobei die Rotationsachse (5) auf der Schweißachse (4) liegt oder um die Schweißachse (4) oszilliert und den Mittelpunkt des ersten Spots (2) darstellt.

6. Verfahren nach Anspruch 5,
   **dadurch gekennzeichnet,**
   **dass** der Spotdurchmesser zwischen 0,1 und 1 mm beträgt, wobei gilt:

$$x_{df} = 0,8 * d_f$$

und

$$0,45mm \leq x_{df} + \frac{d_f}{2} \leq 1,5mm$$

7. Verfahren nach Anspruch 2,
   **dadurch gekennzeichnet,**
   **dass** bei einer Laserstrahlkonfiguration (12) zwei Laserstrahlen (2, 3) bzw. zwei Laserspots (2, 3) um eine Rotationsachse (5) rotieren, wobei ein erster Laserstrahl (2) bzw. erster Laserspot (2) mit einem ersten Radius um die Rotationsachse (5) rotiert und der zweite Laserstrahl (3) bzw. zweite Laserspot (3) mit einem zweiten Radius um die Rotationsachse (5) rotiert, wobei einer der Radien größer ist als der andere, wobei folgende Bedingungen gelten:

$$0,45mm \leq x_{df} - x_{off} + \frac{d_f}{2} \leq 1,5mm$$

$$x_{df} \geq 0,8 * d_f$$

$$0 < x_{off} < \frac{x_{df}}{2}$$

8. Verfahren nach einem der vorhergehenden Ansprüche,
   **dadurch gekennzeichnet,**
   **dass** mit einer Laserleistung zwischen 2 und 10 kW, insbesondere 3 bis 8 kW, bevorzugt 4 bis 7 kW geschweißt wird.

9. Verfahren nach einem der vorhergehenden Ansprüche,
   **dadurch gekennzeichnet,**
   **dass** die Rührwirkung $\eta$ in mm$^{-1}$ zwischen 4 und 30 mm$^{-1}$ beträgt.

10. Verfahren nach einem der vorhergehenden Ansprüche,
    **dadurch gekennzeichnet,**
    **dass** die Schweißgeschwindigkeit $v_W$ zwischen 5 und 12 m/min, insbesondere 6 und 10 m/min beträgt.

11. Verfahren nach einem der vorhergehenden Ansprüche,
    **dadurch gekennzeichnet,**
    **dass** als Grundmaterial ein Stahl verwendet wird, der ein Bor-Mangan-Stahl ist, welcher durch ein Austenitisierungs- und Abschreckverfahren auf besonders bevorzugt eine Zugfestigkeit von größer als 900 MPa härtbar ist und insbesondere ein Stahl aus der Gruppe der CMnB-Stähle, wie beispielsweise ein 22MnB5 oder 20MnB8, verwendet wird.

12. Verfahren nach einem der vorhergehenden Ansprüche,
    **dadurch gekennzeichnet,**

    **dass** als Grundmaterial ein Stahl der allgemeinen Legierungszusammensetzung (in Masse-%)

    | | |
    |---|---|
    | Kohlenstoff (C) | 0,03-0,6 |
    | Mangan (Mn) | 0,3-3,0 |
    | Aluminium (Al) | 0,01-0,07 |
    | Silizium (Si) | 0,01-0,8 |
    | Chrom (Cr) | 0,02-0,6 |
    | Nickel (Ni) | <0,5 |
    | Titan (Ti) | 0,01-0,08 |
    | Niob (Nb) | <0,1 |
    | Stickstoff (N) | < 0,02 |
    | Bor (B) | < 0,02 |
    | Phosphor (P) | < 0,01 |
    | Schwefel (S) | < 0,01 |
    | Molybdän (Mo) | < 1 |

    Rest Eisen und erschmelzungsbedingte Verunreinigungen, verwendet wird.

13. Verfahren nach einem der vorhergehenden Ansprüche,
    **dadurch gekennzeichnet,**

    **dass** als Grundmaterial ein Stahl der allgemeinen Legierungszusammensetzung (in Masse-%)

    | | |
    |---|---|
    | Kohlenstoff (C) | 0,03-0,36 |
    | Mangan (Mn) | 0,3-2,00 |
    | Aluminium (Al) | 0,03-0,06 |
    | Silizium (Si) | 0,01-0,20 |
    | Chrom (Cr) | 0,02-0,4 |
    | Nickel (Ni) | <0,5 |
    | Titan (Ti) | 0,03-0,04 |
    | Niob (Nb) | <0,1 |
    | Stickstoff (N) | < 0,007 |

(fortgesetzt)

| | |
|---|---|
| Bor (B) | < 0,006 |
| Phosphor (P) | < 0,01 |
| Schwefel (S) | < 0,01 |
| Molybdän (Mo) | < 1 |

Rest Eisen und erschmelzungsbedingte Verunreinigungen, verwendet wird.

## Claims

1. A method for welding coated steel sheets, particularly steel sheets that are coated with an aluminum-silicon metallic coating layer, wherein a configuration (1, 11, 12) of two laser beams (2, 3) is provided, wherein the laser beams act on a weld pool that is to be formed, wherein at least one laser beam (3) rotates around a rotation axis (5) so that the laser beams (2, 3) execute a movement relative to each other, wherein the laser beams (2, 3) are guided along a welding axis (4), wherein in order to achieve a mixing of the weld pool, a defined stirring effect and a defined welding speed in relation to each other are adhered to, wherein the following condition applies to the stirring effect:

$$\eta = \frac{f_{rot}}{v_w}$$

where $f_{rot}$ is the rotation frequency and $v_W$ is the welding speed and wherein the following conditions apply:

$$4 \leq \eta \leq \frac{120}{v_w} \left[\frac{1}{mm}\right]$$

and

$$4 \leq v_w \leq 14 \left[\frac{m}{min}\right].$$

2. The method according to claim 1,
**characterized in that**
the laser beams (2, 3) are positioned symmetrically around a rotation axis (5) and rotate around the rotation axis (5) in diametrically opposed positions or one laser beam (2) is guided along a welding axis and the other laser beam (3) rotates around the first laser beam (2) or a first laser beam (2) rotates with a first smaller radius around the rotation axis (5) while the second laser beam (3) rotates with a larger radius around the rotation axis (5) or a mixture of these forms of movement.

3. The method according to one of the preceding claims,
**characterized in that**
with a symmetrical rotation of the laser beams (2, 3) or more precisely of their projected areas or spots, the laser beams (2, 3) are each spaced apart from the center by the spot spacing $x_{df}$, wherein the spot diameter or the diameter of the laser beam $d_f$ is 0.1 mm to 1 mm, wherein the total coverage width of the laser beams (2, 3) is the sum of the spacing of the spot centers from each other plus one spot diameter, wherein the total is between 0.5 mm and 2.5 mm.

4. The method according to claim 3,
**characterized in that**
for the spot spacing $x_{df}$, the following condition applies: $x_{df} \geq 0.8 * d_f$.

5. The method according to claim 2,
**characterized in that**
in a laser beam configuration (11), two laser beams (2, 3) are positioned orbitally, wherein a first laser beam (3) remains along the weld advancing direction (10) on a central axis of the weld pool, namely the welding axis (4), while the second laser beam (3) or second spot (3) rotates around a rotation axis (5), wherein the rotation axis (5) lies on the welding axis (4) or oscillates around the welding axis (4) and constitutes the center point of the first spot (2).

6. The method according to claim 5,
**characterized in that**
the spot diameter is between 0.1 and 1 mm, wherein the following conditions apply:

$$x_{df} \geq 0.8 * d_f$$

and

$$0.45 \ mm \leq x_{df} + \frac{d_f}{2} \leq 1.5 \ mm.$$

7. The method according to claim 2,
**characterized in that**
in a laser beam configuration (12), two laser beams (2, 3) or two laser spots (2, 3) rotate around a rotation axis (5), wherein a first laser beam (2) or first laser spot (2) rotates with a first radius around the rotation axis (5) and the second laser beam (3) or second laser spot (3) rotates with a second radius around the rotation axis (5), wherein one of the radii is greater than the other, wherein the following conditions apply:

$$0.45 \ mm \leq x_{df} - x_{off} + \frac{d_f}{2} \leq 1.5 \ mm$$

$$x_{df} \geq 0.8 * d_f$$

$$0 < x_{off} < \frac{x_{df}}{2}$$

8. The method according to one of the preceding claims,
**characterized in that**
the welding is performed with a laser power of between 2 and 10 kW, in particular from 3 to 8 kW, and preferably from 4 to 7 kW.

9. The method according to one of the preceding claims,
**characterized in that**
the stirring effect $\eta$ in mm$^{-1}$ is between 4 and 30 mm$^{-1}$.

10. The method according to one of the preceding claims,
**characterized in that**
the welding speed $v_w$ is between 5 and 12 m/min, in particular between 6 and 10 m/min.

11. The method according to one of the preceding claims,
**characterized in that**
a steel that is a boron-manganese steel is used as the base material, which can be hardened by means of an austenitization and quenching process, particularly preferably to a tensile strength of greater than 900 MPa and in particular, a steel is used that belongs to the group of CMnB steels, for example a 22MnB5 or 20MnB8 steel.

12. The method according to one of the preceding claims,
**characterized in that**

a steel of the following general alloy composition (in % by mass) is used as the base material:

| | |
|---|---|
| carbon (C) | 0.03-0.6 |
| manganese (Mn) | 0.3-3.0 |
| aluminum (Al) | 0.01-0.07 |
| silicon (Si) | 0.01-0.8 |
| chromium (Cr) | 0.02-0.6 |
| nickel (Ni) | < 0.5 |
| titanium (Ti) | 0.01-0.08 |
| niobium (Nb) | < 0.1 |
| nitrogen (N) | < 0.02 |
| boron (B) | < 0.02 |
| phosphorus (P) | < 0.01 |
| sulfur (S) | < 0.01 |
| molybdenum (Mo) | < 1 |

residual iron and smelting-related impurities.

13. The method according to one of the preceding claims,
**characterized in that**

a steel of the following general alloy composition (in % by mass) is used as the base material:

| | |
|---|---|
| carbon (C) | 0.03-0.36 |
| manganese (Mn) | 0.3-2.00 |
| aluminum (Al) | 0.03-0.06 |
| silicon (Si) | 0.01-0.20 |
| chromium (Cr) | 0.02-0.4 |
| nickel (Ni) | < 0.5 |
| titanium (Ti) | 0.03-0.04 |
| niobium (Nb) | < 0.1 |
| nitrogen (N) | < 0.007 |
| boron (B) | < 0.006 |
| phosphorus (P) | < 0.01 |
| sulfur (S) | < 0.01 |
| molybdenum (Mo) | < 1 |

residual iron and smelting-related impurities.

**Revendications**

1. Procédé de soudage de tôles d'acier revêtues, en particulier de tôles d'acier revêtues avec une couche de revêtement métallique en aluminium-silicium, dans lequel existe une configuration (1, 11, 12) de deux faisceaux laser (2, 3), dans lequel les faisceaux laser agissent sur un bain de fusion à former, dans lequel au moins un faisceau laser (3) tourne autour d'un axe de rotation (5) de sorte que les faisceaux laser (2, 3) effectuent un mouvement relatif l'un par rapport à l'autre, dans lequel les faisceaux laser (2, 3) sont guidés le long d'un axe de soudage (4), dans lequel un effet d'agitation défini et une vitesse de soudage définie sont maintenus en fonction l'un de l'autre afin d'obtenir le mélange du bain de fusion, dans lequel l'équation suivante s'applique pour l'effet d'agitation : $\eta = \frac{f_{rot}}{v_w}$ où $f_{rot}$ est la fréquence de rotation et $v_w$ est la vitesse de soudage, et où

$$4 \leq \eta \leq \frac{120}{v_w} \left[ \frac{1}{mm} \right]$$

et

$$4 \leq V_W \leq 14 \left[\frac{m}{min}\right].$$

2. Procédé selon la revendication 1, **caractérisé en ce que**, les faisceaux laser (2, 3) tournent de manière diamétralement opposée autour d'un axe de rotation en étant agencés de manière symétrique autour dudit axe de rotation (5), ou un faisceau laser (2) est guidé le long d'un axe de soudage et l'autre faisceau laser (3) tourne autour du premier faisceau laser (2), ou un premier faisceau laser (2) tourne autour de l'axe de rotation (5) avec un premier rayon inférieur tandis que le deuxième faisceau laser (3) tourne autour de l'axe de rotation (5) avec un rayon supérieur, ou un mélange desdites formes de mouvement.

3. Procédé selon l'une des revendications précédentes, **caractérisé en ce que**, lors d'une rotation symétrique des faisceaux laser (2, 3) ou de leurs surfaces de projection ou points, les faisceaux laser (2, 3) sont espacés respectivement par rapport au centre de la distance de point $X_{df}$, le diamètre de point ou le diamètre du faisceau laser df étant compris entre 0,1 mm et 1 mm, la largeur de couverture totale des faisceaux laser (2, 3) étant la distance entre les centres de point à laquelle on ajoute un diamètre de point, ladite largeur étant comprise entre 0,5 mm et 2,5 mm.

4. Procédé selon la revendication 3, **caractérisé en ce que**

   la distance de point $X_{df}$,
   $X_{df} \geq 0,8 * d_f$ s'applique.

5. Procédé selon la revendication 2, **caractérisé en ce que**, dans une configuration de faisceau laser (11), deux faisceaux laser (2, 3) sont agencés de manière orbitale, un premier faisceau laser (3) demeurant le long de la direction de progression du soudage (10) sur un axe central du bain de fusion, à savoir l'axe de soudage (4), tandis que le deuxième faisceau laser (3) ou deuxième point (3) tourne autour d'un axe de rotation (5), où l'axe de rotation (5) se trouve sur l'axe de soudage (4) ou oscille autour de l'axe de soudage (4) et représente le centre du premier point (2).

6. Procédé selon la revendication 5, **caractérisé en ce que** le diamètre de point est compris entre 0,1 et 1 mm, où :

$$x_{df} = 0,8 * d_f$$

et

$$0,45 \text{ mm} \leq x_{df} + \frac{d_f}{2} \leq 1,5 \text{ mm.}$$

7. Procédé selon la revendication 2, **caractérisé en ce que**, dans une configuration de faisceau laser (12), deux faisceaux laser (2, 3) ou deux points laser (2, 3) tournent autour d'un axe de rotation (5), un premier faisceau laser (2) ou un premier point laser (2) tournant autour de l'axe de rotation (5) avec un premier rayon, et le deuxième faisceau laser (3) ou le deuxième point laser (3) tournant autour de l'axe de rotation (5) avec un deuxième rayon, où un des rayons est supérieur à l'autre, et où les conditions ci-après s'appliquent :

$$0,45 \text{ mm} \leq x_{df} - x_{off} + \frac{d_f}{2} \leq 1,5 \text{ mm}$$

$$x_{df} \geq 0,8 * d_f$$

$$0 < x_{off} < \frac{x_{df}}{2}$$

8. Procédé selon l'une des revendications précédentes, **caractérisé en ce que** le soudage est réalisé avec une puissance laser comprise entre 2 et 10 kW, en particulier comprise entre 3 et 8 kW, de manière préférée comprise entre 4 et 7 kW.

9. Procédé selon l'une des revendications précédentes, **caractérisé en ce que** l'effet d'agitation η, en mm$^{-1}$, est compris entre 4 et 30 mm$^{-1}$.

10. Procédé selon l'une des revendications précédentes, **caractérisé en ce que** la vitesse de soudage Vw est comprise entre 5 et 12 m/min, en particulier entre 6 et 10 m/min.

11. Procédé selon l'une des revendications précédentes, **caractérisé en ce que** l'on utilise comme matériau de base un acier qui est un acier au bore-manganèse qui peut être durci grâce à un procédé d'austénitisation et de trempe jusqu'à une résistance à la traction de manière particulièrement préférée supérieure à 900 MPa, et en particulier un acier du groupe des aciers CMnB tel que du 22MnB5 ou du 20MnB8.

12. Procédé selon l'une des revendications précédentes,
    **caractérisé en ce que**

    l'on utilise comme matériau de base un acier de composition générale d'alliage (% en masse)

    | | |
    |---|---|
    | Carbone (C) | 0,03 à 0,6 |
    | Manganèse (Mn) | 0,3 à 3,0 |
    | Aluminium (Al) | 0,01 à 0,07 |
    | Silicium (Si) | 0,01 à 0,8 |
    | Chrome (Cr) | 0,02 à 0,6 |
    | Nickel (Ni) | < 0,5 |
    | Titane (Ti) | 0,01 à 0,08 |
    | Niobium (Nb) | < 0,1 |
    | Azote (N) | < 0,02 |
    | Bore (B) | < 0,02 |
    | Phosphore (P) | < 0,01 |
    | Soufre (S) | < 0,01 |
    | Molybdène (Mo) | < 1 |

    le reste étant du fer et des impuretés causées par la fusion.

13. Procédé selon l'une quelconque des revendications précédentes,
    **caractérisé en ce que**

    l'on utilise un acier de composition générale d'alliage (% en masse)

    | | |
    |---|---|
    | Carbone (C) | 0,03 à 0,36 |
    | Manganèse (Mn) | 0,3 à 2,00 |
    | Aluminium (Al) | 0,03 à 0,06 |
    | Silicium (Si) | 0,01 à 0,20 |
    | Chrome (Cr) | 0,02 à 0,4 |
    | Nickel (Ni) | < 0,5 |
    | Titane (Ti) | 0,03 à 0,04 |
    | Niobium (Nb) | < 0,1 |
    | Azote (N) | < 0,007 |
    | Bore (B) | < 0,006 |
    | Phosphore (P) | < 0,01 |
    | Soufre (S) | < 0,01 |
    | Molybdène (Mo) | < 1 |

    le reste étant du fer et des impuretés causées par la fusion.

Symmetrisch

## Fig. 1a

Asymmetrisch

## Fig. 1b

Orbital

$x_{df}$ ........Spotabstand

$d_f$ ........Spotdurchmesser

$x_{off}$ ........Exzentrität

☆ ........Rotationsachse

# Fig. 1c

Umdrehung/Vorschub [1/mm]
Rührwirkung η

## Fig. 2

Umdrehung/Vorschub [1/mm]
Rührwirkung η

Wirtschaftlichkeit ist nicht mehr gegeben

Obere Grenze: Vermehtes auftreten von Humping Spritzer und Löchern

Rührwirkung zu gering + Spritzerneigung

## Fig. 3

| | $V_w$ [m/min] | $d_f$ [mm] | $x_{df}$ [mm] | $x_{off}$ [mm] | $\eta$ [mm-1] | P [kW] | Schweißnahthomogenität | Prozessstabilität | |
|---|---|---|---|---|---|---|---|---|---|
| V1 | 6 | 0,3 | 0 | 0 | 0 | 3 | - | | nicht erfindungsgemäß |
| V2 | 6 | 0,3 | 0,9 | 0,45 | 4,125 | 4,3 | + | | erfindungsgemäß |
| V3 | 6 | 0,3 | 0,9 | 0,45 | 20 | 5,5 | + | | erfindungsgemäß |
| V4 | 6 | 0,3 | 0,9 | 0,45 | 2 | 3,8 | - | | nicht erfindungsgemäß |
| V5 | 10 | 0,3 | 0,9 | 0,45 | 11,4 | 6,5 | + | | erfindungsgemäß |
| V6 | 8 | 0,3 | 0,9 | 0,45 | 25 | 6 | n.b. | instabil | nicht erfindungsgemäß |
| V7 | 8 | 0,3 | 0,9 | 0,35 | 4,125 | 4,3 | - | | erfindungsgemäß |
| V8 | 6 | 0,3 | 0,9 | 0,35 | 20 | 5,5 | - | | erfindungsgemäß |
| V9 | 6 | 0,3 | 0,9 | 0,35 | 2 | 3,8 | n.b. | instabil | nicht erfindungsgemäß |
| V10 | 10 | 0,3 | 0,9 | 0,35 | 11,4 | 6,5 | - | | erfindungsgemäß |
| V11 | 8 | 0,3 | 0,9 | 0,35 | 25 | 6 | n.b. | instabil | nicht erfindungsgemäß |
| V12 | 6 | 0,3 | 0,9 | 0 | 4,125 | 4,3 | - | | erfindungsgemäß |
| V13 | 6 | 0,3 | 0,9 | 0 | 20 | 5,5 | - | | erfindungsgemäß |
| V14 | 6 | 0,3 | 0,9 | 0 | 2 | 3,8 | - | | nicht erfindungsgemäß |
| V15 | 10 | 0,3 | 0,9 | 0 | 11,4 | 6,5 | - | | erfindungsgemäß |
| V16 | 6 | 0,3 | 0,4 | 0,2 | 4,125 | 4 | - | | erfindungsgemäß |

Fig. 4

EP 4 065 307 B1

Fig. 5

Prozessfenster Spotdurchmesser/Spotabstand

Fig. 6

Fig. 7

Prozessfenster Spotdurchmesser/Spotabstand

Fig. 8

Fig. 9

Fig. 10

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012111118 B3
- DE 102014001979 A1
- EP 2737971 A1
- EP 1878531 B1
- EP 2942143 B1
- EP 2883646 B1
- EP 2007545 B1
- WO 2017103149 A1
- WO 2019030249 A1
- DE 102017120051 A1
- JP 20040001084 B
- DE 102014107716 B3